# EUROPEAN PATENT SPECIFICATION

(11) **EP 2 578 810 B1**
(45) Date of publication and mention of the grant of the patent: **04.05.2016**
(21) Application number: 11786598.0
(22) Date of filing: 23.05.2011
(51) Int. Cl.: F01D 11/02, F01D 25/00, F01D 25/24, F02C 7/28, F01D 5/14, F01D 5/22, F01D 11/08

(54) **SEAL STRUCTURE, TURBINE MACHINE EQUIPPED WITH SAME, AND POWER PLANT EQUIPPED WITH SAID TURBINE MACHINE**
DICHTUNGSSTRUKTUR, HIERMIT AUSGESTATTETE TURBINENMASCHINE, UND KRAFTWERK AUSGESTATTETES MIT DIESER TURBINENMASCHINE
STRUCTURE DE JOINT, MACHINE À TURBINE ÉQUIPÉE DE CETTE STRUCTURE ET CENTRALE ÉLECTRIQUE ÉQUIPÉE DE LADITE MACHINE À TURBINE

(30) Priority: 26.05.2010 JP 2010120631
(43) Date of publication of application: 10.04.2013
(73) Proprietor: Mitsubishi Hitachi Power Systems, Ltd., Yokohama 220-8401 (JP)
(72) Inventor: KUWAMURA, Yoshihiro, Tokyo 108-8215 (JP); MATSUMOTO, Kazuyuki, Tokyo 108-8215 (JP); OYAMA, Hiroharu, Tokyo 108-8215 (JP); TANAKA, Yoshinori, Tokyo 108-8215 (JP); MATSUO, Asaharu, Kobe-shi Hyogo 654-0073 (JP)
(74) Representative: Henkel, Breuer & Partner
(86) International application number: PCT/JP2011/061770
(87) International publication number: WO 2011/148899

(56) References cited:
- EP-A1- 2 096 262
- JP-A- S 578 302
- JP-A- 2002 371 802
- JP-A- 2005 214 051
- JP-A- 2006 138 259
- JP-A- 2007 321 721
- JP-A- 2009 085 185

## Description

### {Technical Field}

The present invention relates to a seal structure, a turbine machine having the same, and a power generating plant equipped with the same, and more specifically, it relates to fluid leaking out between a sealing part and shrouds at tips of stationary blades.

### {Background Art}

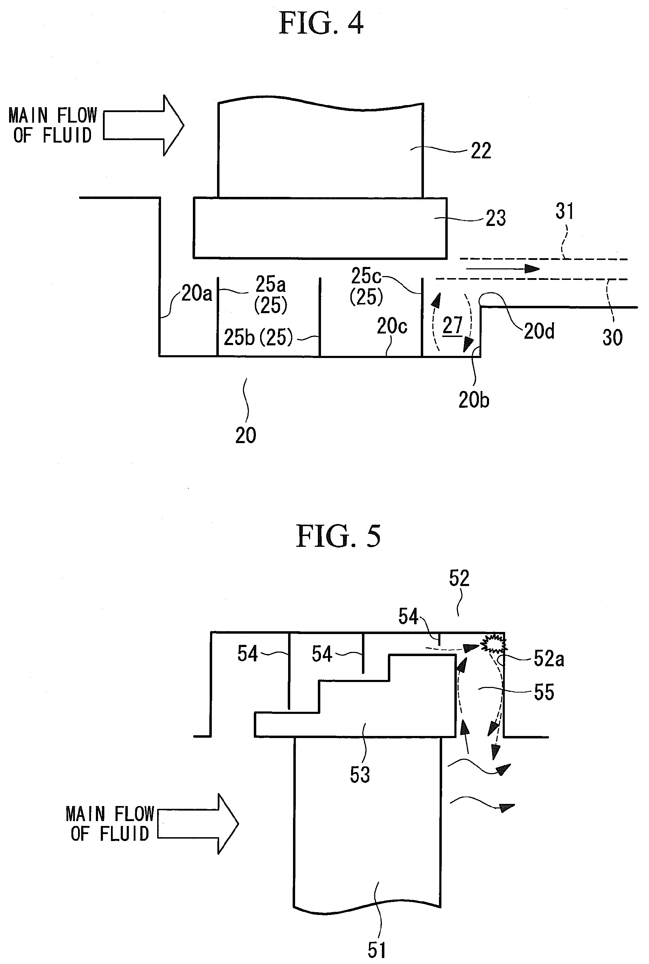

In general, as shown in FIG. 5, a plurality of moving blades 51 of a turbine are provided with moving blade shrouds 53 at tips thereof so as to face a turbine casing 52. The moving blade shrouds 53 come into contact with adjacent shrouds and form an annular shape during rotation of the moving blades 51. Between the moving blade shrouds 53 and the turbine casing 52 is provided a seal portion in which seal fins 54 extending from the turbine casing 52 toward the moving blade shrouds 53 are connected to the turbine casing 52. The seal fins 54 are provided to reduce the level of leakage of fluid, which is a main flow of fluid guided to the moving blades 51 and leaking out between the moving blade shrouds 53 and the turbine casing 52 (hereinbelow, "leakage jet") (for example, JP 2005-214051 A and JP 2006-138259 A concerning a steam turbine).

However, in the inventions described in JP 2005-214051 A and JP 2006-291967 A, it is clear that there is a downstream-side wall of the turbine casing on the downstream side, in the flow direction, of the leakage jet leaking from the seal portion, preventing the leakage jet from reaching the air. Therefore, as shown in FIG. 5, the leakage jet (indicated by dashed lines in FIG. 5) guided to a space 55 defined by a downstream-side wall 52a of the turbine casing 52, the moving blade shrouds 53, and the seal fins 54 collides with the downstream-side wall 52a of the turbine casing 52, moves radially inward along the wall 52a, and joins the main flow of fluid (indicated by solid lines in FIG. 5) after impinging on the moving blades 51 at a large angle (for example, 90°). There has been a problem in that, because the inflow angle of the leakage jet with respect to the main flow of fluid when the leakage jet joins the main flow of fluid is large, the leakage jet greatly disturbs the main flow of fluid, causing mixing loss (mixing loss) and decreased turbine efficiency.

Furthermore, when the leakage jet collides with the downstream-side wall 52a of the turbine casing 52, the leakage jet, after collision, moves radially inward along the downstream-side wall 52a of the turbine casing 52. The leakage jet having moved radially inward along the wall 52a of the turbine casing 52 traps a portion of the main flow of fluid and generates an eddy in the space 55, as indicated by dashed lines in FIG. 5. Because a portion of the main flow of fluid is trapped in the space 55, the flow of the main flow of fluid is greatly disturbed, resulting in a problem in that mixing loss (mixing loss) occurs.

EP 2096262 A discloses a seal structure for shrouds of rotary blades of an axial flow turbine. The seal structure includes a turbine casing and a blade ring having shrouds formed at outer tip end portions of rotary blades and spaced apart from the casing to form a radial tip clearance through which a leakage flow is passing during operation of the turbine. The casing comprises plural sealing elements arranged in the radial gap facing the shrouds to reduce the shroud leakage flow. A deflector is provided at the casing downstream in the vicinity of the shroud step and extending in a radial direction towards the inward of the casing such that the deflector is still spaced in the radial direction from the outer radius level of the shroud step.

JP 57-8302 A and JP 2007-321721 A disclose further similar seal structures for shrouds of rotary blades of an axial flow turbine.

The present invention has been made in view of these circumstances, and an object thereof is to provide a seal structure capable of suppressing disturbance of a flow of a main flow of fluid due to fluid leaking out of a seal portion of stationary blades, a turbine machine having the same, and a power generating plant equipped with the same.

### {Solution to Problem}

To overcome the above-described problems the present invention provides the seal structure with the features of claim 1, the turbine machine having the same, and the power generating plant equipped with the same.

More specifically, the seal structure according to the present invention includes shrouds that are provided at tips of a plurality of stationary blades on which a main flow of fluid impinges in operation and that come into contact with adjacent shrouds to form a cylindrical shape; a sealing part connected to a rotating shaft (structure body) facing the shrouds; wherein the outer circumference of the rotating shaft is formed in a recessed shape that is recessed towards the central axis of the rotating shaft and a space that is defined by downstream sides of the shrouds, a downstream side of the sealing part, a wall surface of the recessed shape facing the radially inner side of the shrouds, and a wall of said recessed shape on a downstream side of the stationary blades on a downstream side of the rotating shaft and that communicates with the main flow of fluid that has impinged on the blades. A corner of the wall on the downstream side of the rotating shaft is formed so as to be disposed a predetermined distance away from a shroud extension extending toward the downstream side of the shrouds and away from a sealing-part extension provided substantially parallel to the shroud extension and extending toward the downstream side of the sealing part and so as to be located on an opposite side of the shroud extension with respect to the sealing-part extension.

The fluid leaking out between the sealing part and the shrouds into the space is led out along the shroud extension extending toward the downstream side of the shroud and the sealing-part extension extending parallel thereto toward the downstream side of the sealing part. Thus, if there is a downstream-side wall of a structure body, such as a turbine casing or a rotating shaft, in an area between the sealing-part extension and the shroud extension, in other words, in the extending direction of the area through which the leakage fluid flows, the leakage fluid passing through the space collides with the downstream-side wall of the structure body. The leakage fluid that has collided with the wall of the structure body flows along the downstream-side wall of the structure body in the direction opposite to the structure body, i.e., toward the main flow of fluid. Because the space communicates with the main flow of fluid that has impinged on the blades, the fluid leaking out along the wall joins the main flow of fluid that has impinged on the blades at a large angle (for example, 90°). Thus, the flow of the main flow of fluid that has impinged on the blades is greatly disturbed.

Furthermore, for example, in the case where the blades are the moving blades 51 and the structure body is the turbine casing 52, as in FIG. 5, the fluid leaking out into the space 55 collides with the downstream-side wall 52a of the turbine casing 52, and the leakage fluid after collision moves radially inward along the downstream-side wall 52a of the turbine casing 52 and flows clockwise, as indicated by dashed lines in FIG. 5. Thus, the leakage fluid flows in a direction opposite to the flow direction of the main flow of fluid that has impinged on the moving blades 51, trapping the main flow of fluid that has impinged on the moving blades 51 in the space 55. Accordingly, the flow of the main flow of fluid that has impinged on the moving blades 51 is greatly disturbed.

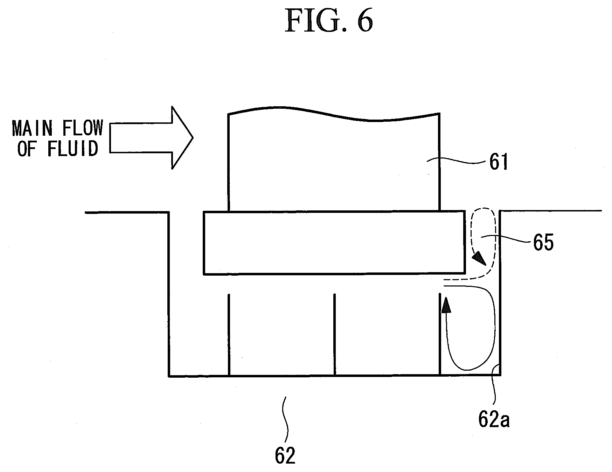

In the case where the blades are stationary blades 61 and the structure body is a rotating shaft 62, as in FIG. 6, the fluid leaking out into a space 65 collides with a downstream-side wall 62a of the rotating shaft 62, and a portion of the leakage fluid after collision moves radially outward along the downstream-side wall 62a of the rotating shaft 62 and flows counterclockwise, as indicated by dashed lines in FIG. 6. Thus, the leakage fluid flows in a direction opposite to the flow direction of the main flow of fluid that has impinged on the stationary blades 61, trapping the main flow of fluid that has impinged on the stationary blades 61 in the space 65. Accordingly, the flow of the main flow of fluid that has impinged on the stationary blades 61 is greatly disturbed.

To counter such problems, in the present invention, an end of the downstream-side wall of the rotating shaft defining the space is disposed away from the shroud extension extending toward the downstream side of the shroud and away from the sealing-part extension extending parallel thereto toward the downstream side of the sealing part and is located on the opposite side of the shroud extension with respect to the sealing-part extension. With this configuration, it is possible to prevent the fluid leaking out between the sealing part and the shrouds from colliding with the downstream-side wall of the rotating shaft. Thus, the leakage fluid can be made to join the main flow of fluid that has impinged on the blades at a small inflow angle (for example, 30° or less). Accordingly, mixing loss caused by the leakage fluid joining the main flow of fluid can be reduced.

Furthermore, because the leakage fluid can be led out at a position away from the end of the downstream-side wall (wall surface) of the rotating shaft, it is possible to prevent the fluid leaking out between the sealing part and the shrouds from colliding with the downstream-side wall of the rotating shaft.

Thus, , in the case where the blades are the stationary blades 61 and the structure body is the rotating shaft 62, as in FIG. 6, it is possible to prevent a situation where the leakage fluid collides with the downstream-side wall 62a of the rotating shaft 62, and a portion of the leakage fluid after collision moves radially outward along the downstream-side wall 62a of the rotating shaft 62 and flows counterclockwise, as indicated by dashed lines in FIG. 6, trapping the main flow of fluid that has impinged on the stationary blades 61 in the space 65. More specifically, the leakage fluid flows clockwise, which is a direction opposite to the direction shown by the dashed lines in FIG. 6. Accordingly, it is possible to prevent the flow of the main flow of fluid that has impinged on the stationary blades 61 from being greatly disturbed, thereby reducing mixing loss caused by the leakage fluid joining the flow of the main flow of fluid.

The predetermined distance between the shroud extension and the sealing-part extension is a radial distance set such that the sealing part does not touch the shrouds during operation and such that the level of leakage of fluid leaking between the shrouds and the sealing part can be reduced to a minimum.

Furthermore, in the seal structure according to the present invention, surfaces of the shrouds facing the structure body are preferably provided substantially parallel to a flow direction of the main flow of fluid that has impinged on the blades.

The surfaces of the shrouds facing the structure body (i.e., the inner circumferential surfaces in the case of the stationary blades) are provided substantially parallel to the flow direction of the main flow of fluid that has impinged on the blades. Thus, the fluid leaking between the sealing part and the shrouds can be made to join the main flow of fluid that has impinged on the blades at a small angle. Accordingly, mixing loss caused by the leakage fluid joining the main flow of fluid can be reduced.

Furthermore, in the seal structure according to the present invention, surfaces of the shrouds facing the structure body are preferably inclined such that they gradually become farther away from the structure body along a flow direction of the main flow of fluid that has impinged on the blades.

The surfaces of the shrouds facing the structure body are provided in an inclined manner such that they gradually become farther away from the structure body along the flow direction of the main flow of fluid that has impinged on the blades. With this configuration, the leakage fluid can be led out at a position away from the downstream-side wall (wall surface) of the structure body, and thus, it is possible to prevent the fluid leaking out between the sealing part and the shrouds from colliding with the downstream-side wall of the structure body.

Thus, , in the case where the blades are the stationary blades 61 and the structure body is the rotating shaft 62, as in FIG. 6, it is possible to prevent a situation where the leakage fluid collides with the downstream-side wall 62a of the rotating shaft 62, and a portion of the leakage fluid after collision moves radially outward along the downstream-side wall 62a of the rotating shaft 62 and flows counterclockwise, as indicated by dashed lines in FIG. 6, trapping the main flow of fluid that has impinged on the stationary blades 61 in the space 65. More specifically, the leakage fluid flows clockwise, which is a direction opposite to the direction shown by the dashed lines in FIG. 6. Accordingly, it is possible to prevent the flow of the main flow of fluid that has impinged on the stationary blades 61 from being greatly disturbed, thereby reducing mixing loss caused by the leakage fluid joining the flow of the main flow of fluid.

The angle at which the surfaces of the shrouds facing the structure body are inclined is set such that the leakage fluid does not greatly disturb the flow of the main flow of fluid that has impinged on the blades when it joins the main flow of fluid that has impinged on the blades.

The preferred angle at which the leakage fluid is made to join the main flow of fluid that has impinged on the blades is 30° or less.

Furthermore, in the seal structure according to the present invention, surfaces of the shrouds facing the structure body are preferably inclined such that they gradually become closer to the structure body along a flow direction of the main flow of fluid that has impinged on the blades.

The surfaces of the shrouds facing the structure body are provided in an inclined manner such that they gradually become closer to the structure body along the flow direction of the main flow of fluid that has impinged on the blades. Thus, it is possible to prevent the fluid leaking out between the sealing part and the shrouds from directly joining the main flow of fluid that has impinged on the blades, and also it is possible to further prevent the main flow of fluid that has impinged on the blades from being trapped. Accordingly, mixing loss caused by the leakage fluid joining the main flow of fluid can be reduced.

The angle at which the surfaces of the shrouds facing the structure body are inclined is set such that the leakage fluid does not greatly disturb the flow of the main flow of fluid that has impinged on the blades when it joins the main flow of fluid that has impinged on the blades.

The preferred angle at which the leakage fluid is made to join the main flow of fluid that has impinged on the blades is 30° or less.

Furthermore, a turbine machine according to the present invention includes any one of the above-described seal structures.

A seal structure capable of reducing mixing loss caused when the leakage jet leaking out between the sealing part and the shrouds joins the main flow of fluid that has impinged on the blades is provided. This can prevent a drop in the turbine efficiency of the turbine machine.

Furthermore, a power generating plant according to the present invention includes the above-described turbine machine.

The turbine machine capable of preventing a drop in the turbine efficiency is provided. This can prevent a drop in the power generating efficiency of the power generating plant.

### {Advantageous Effects of Invention}

An end of the downstream-side wall of the structure body defining the space is disposed away from the shroud extension extending toward the downstream side of the shroud and away from the sealing-part extension extending parallel thereto toward the downstream side of the sealing part and is located on the opposite side of the shroud extension with respect to the sealing-part extension. With this configuration, it is possible to prevent the fluid leaking out between the sealing part and the shrouds from colliding with the downstream-side wall of the structure body. Thus, the leakage fluid can be made to join the main flow of fluid that has impinged on the blades at a small inflow angle (for example, 30° or less). Accordingly, mixing loss caused by the leakage fluid joining the main flow of fluid can be reduced.

Furthermore, because the leakage fluid can be led out at a position away from the end of the downstream-side wall (wall surface) of the structure body, it is possible to prevent the fluid leaking out between the sealing part and the shrouds from colliding with the downstream-side wall of the structure body.

### {Brief Description of Drawings}

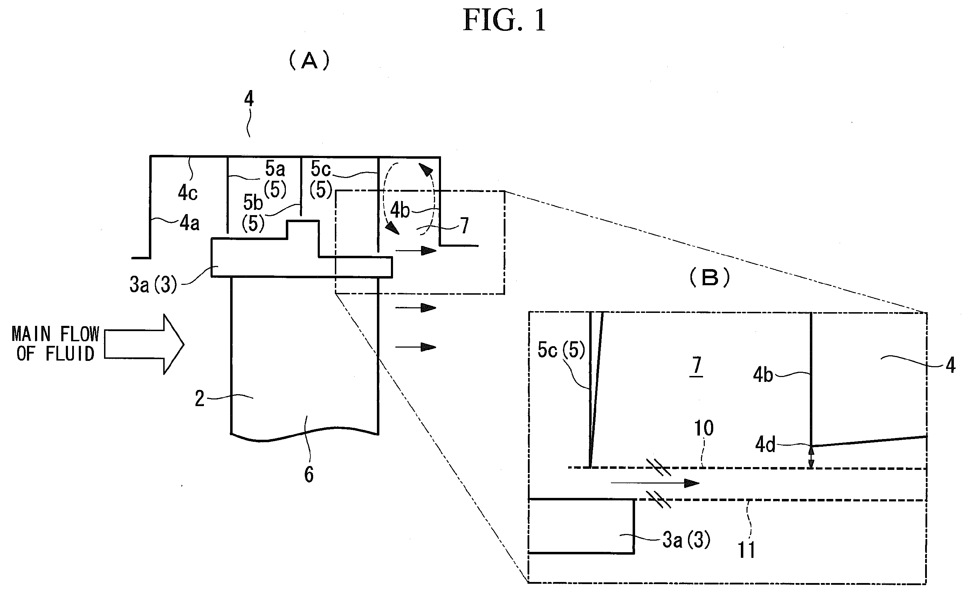

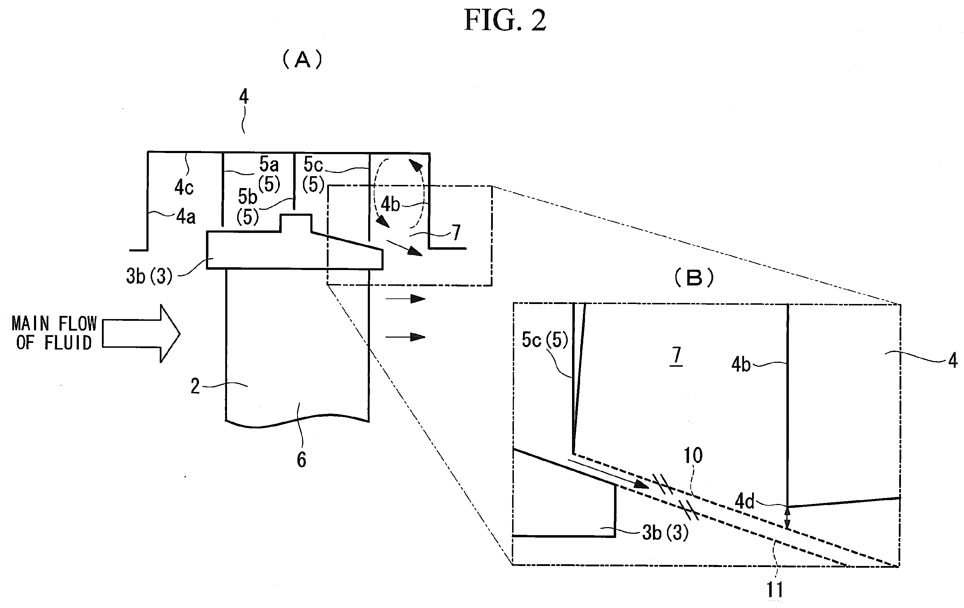

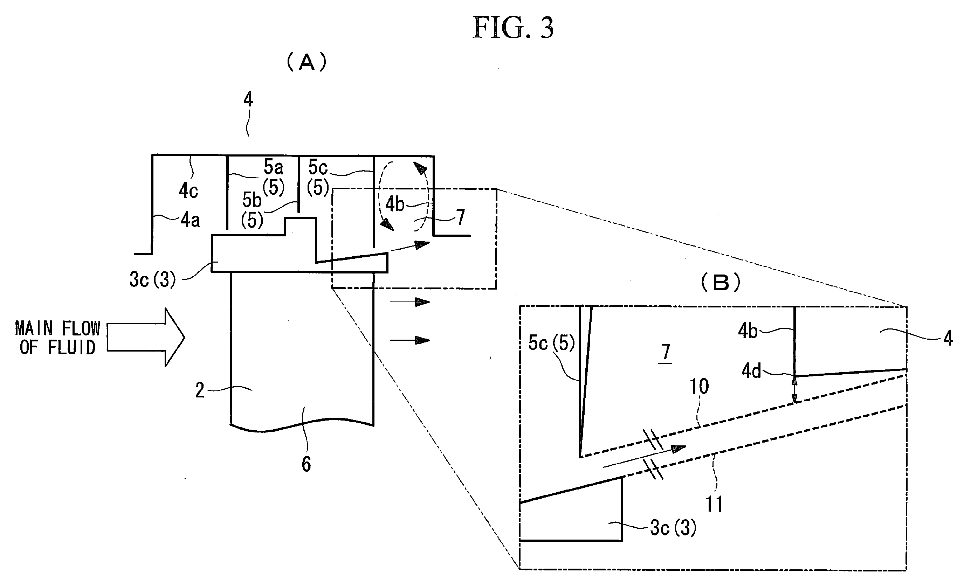

{FIG. 1} FIG. 1 shows a seal structure of a gas turbine in a power generating plant according to a first example serving to explain features of the present invention, in which (A) is a schematic view of the configuration thereof and (B) is a partial enlarged view thereof.
{FIG. 2} FIG. 2 shows a seal structure of a gas turbine in a power generating plant according to a second example serving to explain features of the present invention, in which (A) is a schematic view of the configuration thereof and (B) is a partial enlarged view thereof.
{FIG. 3} FIG. 3 shows a seal structure of a gas turbine in a power generating plant according to a third example serving to explain features of the present invention, in which (A) is a schematic view of the configuration thereof and (B) is a partial enlarged view thereof.
{FIG. 4} FIG. 4 is a schematic view of the configuration of a seal structure of a gas turbine in a power generating plant according to an embodiment of the present invention which is a modification of the first example.
{FIG. 5} FIG. 5 is a schematic view of the configuration of a seal structure between moving blades and a turbine casing of a turbine machine in a conventional power generating plant.
{FIG. 6} FIG. 6 is a schematic view of the configuration of a seal structure between stationary blades and a rotating shaft of a turbine machine in a conventional power generating plant.

### {Description of Examples and Embodiments}

### First Example

FIG. 1 shows a seal structure of a gas turbine (a turbine machine) of a power generating plant according to a first example serving to explain features of the invention, in which (A) is a schematic view of the configuration thereof and (B) is a partial enlarged view thereof.

A gas turbine installed in a power generating plant includes stationary blades (not shown) that direct a flow of a main flow of gas (main flow of fluid), which is combustion gas that has been guided into the gas turbine, to a plurality of moving blades (blades) 2, the moving blades 2 on which the main flow of gas that has passed through the stationary blades impinges, moving blade shrouds 3 (3a) that are provided at tips of the moving blades 2 and come into contact with adjacent shrouds to form a cylindrical shape, and a turbine casing (structure body) 4 enclosing the moving blades 2 and the moving blade shrouds (shrouds) 3a therein.

The turbine casing 4 has a cylindrical shape surrounding the outer circumferences of the moving blade shrouds 3a provided at the tips of the moving blades 2. As shown in FIG. 1(A), the inner circumference of the turbine casing 4 is formed in a recessed shape that is recessed toward the outer circumference of the turbine casing 4. The recessed shape provided in the inner circumference of the turbine casing 4 is defined by a wall surface (wall) 4a on the upstream side of the moving blades 2, a wall surface 4b on the downstream side of the moving blades 2, and a wall surface 4c connecting the wall surface 4a and the wall surface 4b and located facing the radially outer side of the moving blade shrouds 3a. Thus, the recessed shape provided in the inner circumference of the turbine casing 4 is recessed toward the outer circumference of the turbine casing 4.

The seal fins 5 are connected, at base ends, to the wall surface 4c forming the recessed shape provided in the inner circumference of the turbine casing 4. The seal fins 5 include at least one seal fin, for example, three seal fins. The seal fins 5a, 5b, and 5c extend from the wall surface 4c of the turbine casing 4 radially inward toward the moving blade shrouds 3a. The tips of the seal fins 5a, 5b, and 5c extending toward the moving blade shrouds 3a are disposed a predetermined distance away from surfaces of the moving blade shrouds 3a facing the turbine casing 4 (hereinbelow, "outer circumferential surfaces"). The number of seal fins 5 is not limited to three, but may be one, two, four or more.

These seal fins 5a, 5b, and 5c reduce the level of leakage of gas (leakage fluid) leaking out between the moving blades 2 and the turbine casing 4 and leaking out between the moving blade shrouds 3a and the turbine casing 4 toward the downstream side of the moving blades 2. The predetermined distance between the outer circumferential surfaces of the moving blade shrouds 3a and the tips of the seal fins 5a, 5b, and 5c in the radial direction is a radial distance that is small but not so small that the outer circumferential surfaces of the moving blade shrouds 3a mechanically touch the seal fins 5a, 5b, and 5c during operation and such that the level of leakage of gas leaking out between the moving blades 2 and the turbine casing 4 (hereinbelow, "leakage jet") can be reduced to a minimum.

The plurality of moving blades 2 are provided in the circumferential direction of a rotating shaft (not shown). The plurality of moving blades 2 constitute moving blade rows 6. The moving blade rows 6 and stationary blade rows (not shown), in which stationary blades are provided in the circumferential direction of the rotating shaft, are provided alternately in multiple stages in the axial direction. The main flow of gas impinges on the moving blades 2. Thus, the gas turbine is rotationally driven. The main flow of gas that has impinged on the moving blades 2 is guided to the stationary blade rows provided on the downstream side.

A cavity (space) 7 is defined by downstream portions of the moving blade shrouds 3a, a downstream portion of the seal fin 5c (sealing part in the present invention) located on the most downstream side among the seal fins 5, and the wall surfaces 4b and 4c of the turbine casing 4 on the downstream side of the recessed shape, and communicates with the main flow of gas that has impinged on the moving blades 2. As shown in FIG. 1(B), a corner (end) 4d, on the inner circumference side, of the wall surface 4b of the turbine casing 4 forming the cavity 7 is disposed away from a moving-blade-shroud extension (shroud extension) 11 extending along the outer circumferential surfaces of the moving blade shrouds 3a toward the downstream side of the moving blade shrouds 3a and away from a seal-fin extension (sealing-part extension) 10 provided substantially parallel thereto at a predetermined distance and extending toward the downstream side of the seal fin 5c located on the most downstream side via the tip of the seal fin 5c located on the most downstream side, and is located on the opposite side of the moving-blade-shroud extension 11 with respect to the seal-fin extension 10.

The predetermined distance between the moving-blade-shroud extension 11 and the seal-fin extension 10 is a radial distance set such that the seal fins 5a, 5b, and 5c do not touch the moving blade shrouds 3a during operation and such that the level of leakage of the leakage jet leaking out between the moving blade shrouds 3a and the seal fins 5a, 5b, and 5c can be reduced to a minimum.

The moving blade shrouds 3a are provided at the tips of the moving blades 2. The moving blade shrouds 3a come into contact with adjacent shrouds and form a cylindrical shape. As shown in FIG. 1(A), the outer circumferential surfaces of the moving blade shrouds 3a have a stepped shape having steps arranged in the flow direction of the main flow of gas impinging on the moving blades 2. The moving blade shrouds 3a have, at the middle parts thereof in the flow direction of the main flow of gas, projections protruding toward the turbine casing 4 (outer circumferential side). The outer circumferential surfaces of the moving blade shrouds 3a on the upstream side, at the middle part, and on the downstream side are formed substantially parallel to the flow direction of the main flow of gas after impinging on the moving blades 2. By making the moving blade shrouds 3a have a stepped shape, the sealing effect between the moving blade shrouds 3a and the turbine casing 4 is increased.

The shape of the moving blade shrouds 3a is not limited to a stepped shape, but may be another shape.

Next, the flows of the main flow of gas and the leakage jet will be described.

The main flow of gas that has been guided to the gas turbine is guided from the stationary blade rows to the moving blade rows 6. The main flow of gas that has been guided to the moving blade rows 6 impinges on the moving blades 2 and drives the gas turbine. The main flow of gas after impinging on the moving blades 2 is guided to the stationary blade rows provided on the downstream side.

Furthermore, a portion of the main flow of gas impinging on the moving blades 2 leaks out from the upstream side of the moving blades 2 to a space between the moving blade shrouds 3a and the turbine casing 4. The main flow of gas leaking out to the space between the moving blade shrouds 3a and the turbine casing 4 is led out from between the moving blade shrouds 3a and the seal fin 5c on the most downstream side, becoming a leakage jet.

The leakage jet led out from between the moving blade shrouds 3a and the seal fin 5c on the most downstream side is led out to an area between the seal-fin extension 10 and the moving-blade-shroud extension 11 (hereinbelow, a "leakage-jet flowing area"). Herein, because the corner 4d of the wall surface 4b on the downstream side of the turbine casing 4 is disposed away from the moving-blade-shroud extension 11 and from the seal-fin extension 10 and is located on the opposite side of the moving-blade-shroud extension 11 with respect to the seal-fin extension 10, the leakage jet led out of the leakage-jet flowing area is led out toward the main flow of gas without colliding with the wall surface 4b or the corner 4d on the downstream side of the turbine casing 4.

The leakage jet led out of the leakage-jet flowing area joins the main flow of gas that has impinged on the moving blades 2 at a small inflow angle with respect to the flow direction thereof. The preferred inflow angle is 30° or less, but a smaller inflow angle is more preferable. Thus, an angle closer to parallel to the flow direction of the main flow of gas is more preferable, and an angle parallel to the flow direction of the main flow of gas is the most preferable.

Furthermore, because the leakage jet can be led out at a position away from the wall surface 4b and the corner 4d on the downstream side of the turbine casing 4, it is possible to prevent the leakage jet leaking out between the seal fin 5c located on the most downstream side and the moving blade shrouds 3a from colliding with the wall surface 4b on the downstream side of the turbine casing 4. Accordingly, it is possible to suppress a situation where the leakage jet collides with the wall surface 4b on the downstream side of the turbine casing 4, the leakage jet, after collision, moves radially inward along the wall surface 4b on the downstream side of the turbine casing 4, forming an eddy flowing clockwise, as indicated by dashed lines in FIG. 5, and the eddy and the main flow of gas flow in opposite directions when the eddy joins the main flow of gas, trapping the main flow of gas that has impinged on the moving blades 2 in the cavity 7. That is, the leakage jet flows counterclockwise in the cavity 7, as indicated by dashed lines in FIG. 1(A).

The seal structure, the turbine machine having the same, and the power generating plant equipped with the same described above provide the following advantages.

The corner (end) 4d of the wall surface (wall) 4b on the downstream side of the turbine casing (structure body) 4 forming the cavity (space) 7 is disposed away from the moving-blade-shroud extension (shroud extension) 11 extending toward the downstream side of the moving blade shrouds (shrouds) 3a and away from the seal-fin extension (sealing-part extension) 10 extending parallel thereto toward the downstream side of the seal fin (sealing part) 5c located on the most downstream side, and is located on the opposite side of the moving-blade-shroud extension 11 with respect to the seal-fin extension 10. With this configuration, it is possible to prevent the leakage jet (leakage fluid) leaking out between the seal fin 5c located on the most downstream side and the moving blade shrouds 3a from colliding with the wall surface 4b on the downstream side of the turbine casing 4. Thus, the leakage jet can join the main flow of gas (main flow of fluid) that has impinged on the moving blades (blades) 2 at a small inflow angle. Accordingly, mixing loss caused by the leakage jet joining the main flow of gas can be reduced.

Furthermore, because the leakage jet can be led out at a position away from the wall surface 4b on the downstream side of the turbine casing 4, it is possible to prevent the leakage jet leaking out between the seal fin 5c located on the most downstream side and the moving blade shrouds 3a from colliding with the wall surface 4b on the downstream side of the turbine casing 4. Accordingly, it is possible to suppress a situation where the leakage jet collides with the wall surface 4b on the downstream side of the turbine casing 4, the leakage jet, after collision, moves radially inward along the wall surface 4b on the downstream side of the turbine casing 4, forming an eddy flowing clockwise, as indicated by dashed lines in FIG. 5, and the eddy and the main flow of gas flow in opposite directions when the eddy joins the main flow of gas, trapping the main flow of gas that has impinged on the moving blades 2 in the cavity 7. That is, the leakage jet flows counterclockwise, as indicated by dashed lines in FIG. 1(A), in the cavity 7. Accordingly, because the flow direction of the leakage jet when joining the main flow of gas that has impinged on the moving blades 2 is substantially the same as that of the main flow of gas, the flow of the main flow of gas that has impinged on the moving blades 2 is prevented from being greatly disturbed. Thus, mixing loss caused by the leakage jet joining the flow of the main flow of gas can be reduced.

The surfaces (outer circumferential surfaces) of the moving blade shrouds 3a facing the turbine casing 4 are provided substantially parallel to the flow direction of the main flow of gas that has impinged on the moving blades 2. Thus, the leakage jet leaking out between the seal fin 5c located on the most downstream side and the moving blade shrouds 3a can be made to join the main flow of gas that has impinged on the moving blades 2 at a small inflow angle. Accordingly, mixing loss caused by the leakage jet joining the main flow of gas can be reduced.

A seal structure capable of reducing mixing loss caused when the leakage jet leaking out between the seal fin 5c located on the most downstream side and the moving blade shrouds 3a joins the main flow of gas that has impinged on the moving blades 2 is provided. This can prevent a drop in the turbine efficiency of the gas turbine (turbine machine).

A gas turbine (turbine machine) capable of preventing a drop in the turbine efficiency is provided. This can prevent a drop in the power generating efficiency of the power generating plant.

### Second Example

A second example serving to explain features of the inventionof the present invention will be described below. Although a seal structure, a turbine machine having the same, and a power generating plant equipped with the same according to this example differ from those according to the first example in that the outer circumferential surfaces on the downstream side of the moving blade shrouds disposed a predetermined distance away from the seal fin (sealing part) 5c located on the most downstream side gradually become farther away from the inside of the turbine casing in the flow direction of the main flow of gas that has impinged on the moving blades, the other configurations are the same. Accordingly, the same configurations and the same flow will be denoted by the same reference numerals, and descriptions thereof will be omitted.

FIG. 2 shows a seal structure of a gas turbine in a power generating plant according to a second example serving to explain features of the present invention, in which (A) is a schematic view of the configuration thereof and (B) is a partial enlarged view thereof.

The outer circumferential surfaces on the downstream side of moving blade shrouds (shrouds) 3b (the surfaces facing the turbine casing 4) are inclined from projections provided at the middle parts of the moving blade shrouds 3b such that they gradually become farther away from the inside of the turbine casing (structure body) 4 along the flow direction of the main flow of gas (main flow) that has impinged on the moving blades (blades) 2. The rate at which the outer circumferential surfaces on the downstream side of the moving blade shrouds 3b gradually become farther away from the inside of the turbine casing 4, i.e., the inclination angle, is desirably 30° or less with respect to the flow direction of the main flow of gas that has impinged on the moving blades 2, which is an inflow angle that does not greatly disturb the flow of the main flow of gas when the leakage jet (leakage fluid) joins the main flow of gas that has impinged on the moving blades 2.

The leakage jet led out from between the seal fin 5c located on the most downstream side and the moving blade shrouds 3b is led out toward the main flow of gas without colliding with the wall surface (wall) 4b or the corner (end) 4d of the turbine casing 4.

Furthermore, the leakage jet led out from between the seal fin 5c located on the most downstream side and the moving blade shrouds 3b joins the main flow of gas that has impinged on the moving blades 2 at a small inflow angle with respect to the flow direction thereof.

As has been described, the seal structure, the turbine machine having the same, and the power generating plant equipped with the same according to this example provide the following advantages.

The outer circumferential surfaces on the downstream side of the moving blade shrouds (shrouds) 3b (the surfaces facing the turbine casing 4) are inclined such that they gradually become farther away from the turbine casing (structure body) 4 along the flow direction of the main flow of gas (main flow of fluid) that has impinged on the moving blades (blades) 2. With this configuration, the leakage jet (leakage fluid) can be led out at a position away from the wall surface (wall) 4b on the downstream side of the turbine casing 4, and thus, it is possible to prevent the leakage jet leaking out between the seal fin (sealing part) 5c located on the most downstream side and the moving blade shrouds 3b from colliding with the wall surface 4b on the downstream side of the turbine casing 4. Accordingly, it is possible to suppress a situation where the leakage jet collides with the wall surface 4b on the downstream side of the turbine casing 4, and the leakage jet, after collision, moves radially inward along the wall surface 4b on the downstream side of the turbine casing 4, forming a clockwise eddy in the cavity 7(space), as indicated by dashed lines in FIG. 5, and trapping the main flow of gas that has impinged on the moving blades 2 in the cavity 7. That is, the leakage jet flows counterclockwise in the cavity 7, as indicated by dashed lines in FIG. 2(A). Accordingly, it is possible to prevent the flow of the main flow of gas that has impinged on the moving blades 2 from being greatly disturbed and to reduce mixing loss caused by the leakage jet joining the main flow of gas.

Third Example

A third example serving to explain features of the inventionof the present invention will be described below. Although a seal structure, a turbine machine having the same, and a power generating plant equipped with the same according to this example differ from those according to the first example in that the outer circumferential surfaces on the downstream side of the moving blade shrouds disposed a predetermined distance away from the seal fin (sealing part) 5c located on the most downstream side gradually become closer to the inside of the turbine casing in the flow direction of the main flow of gas that has impinged on the moving blades, the other configurations are the same. Accordingly, the same configurations and the same flow will be denoted by the same reference numerals, and descriptions thereof will be omitted.

FIG. 3 shows a seal structure of a gas turbine in a power generating plant according to a third example serving to explain features of the present invention, in which (A) is a schematic view of the configuration thereof and (B) is a partial enlarged view thereof.

The outer circumferential surfaces on the downstream side of moving blade shrouds (shrouds) 3c (the surfaces facing the turbine casing 4) are inclined from the projections provided at the middle parts of the moving blade shrouds 3c such that they gradually become closer to the inside of the turbine casing (structure body) 4 along the flow direction of the main flow of gas (main flow) that has impinged on the moving blades (blades) 2. The rate at which the outer circumferential surfaces of the moving blade shrouds 3c on the downstream side gradually become closer to the inside of the turbine casing 4, i.e., the inclination angle, is desirably 30° or less with respect to the flow direction of the main flow of gas that has impinged on the moving blades 2, which is an inflow angle that does not greatly disturb the flow of the main flow of gas when the leakage jet (leakage fluid) joins the main flow of gas that has impinged on the moving blades 2.

The leakage jet led out from between the seal fin (sealing part) 5c located on the most downstream side and the moving blade shrouds 3c is led out toward the main flow of gas without colliding with the wall surface (wall) 4b or corner (end) 4d of the turbine casing 4.

Furthermore, the leakage jet led out from between the seal fin 5c located on the most downstream side and the moving blade shrouds 3c joins the main flow of gas that has impinged on the moving blades 2 at a small inflow angle with respect to the flow direction thereof.

As has been described, the seal structure, the turbine machine having the same, and the power generating plant equipped with the same according to this example provide the following advantages.

The outer circumferential surfaces of the moving blade shrouds (shrouds) 3c on the downstream side (the surfaces facing the turbine casing 4) are inclined such that they gradually become closer to the turbine casing (structure body) 4 along the flow direction of the main flow of gas (main flow of fluid) that has impinged on the moving blades (blades) 2. Thus, the leakage jet (leakage fluid) leaking out between the seal fin (sealing part) 5c located on the most downstream side and the moving blade shrouds 3c does not directly join the main flow of gas that has impinged on the moving blades 2, and it is possible to further prevent the main flow of gas that has impinged on the moving blades 2 from being trapped in the cavity (space). Accordingly, mixing loss caused by the leakage jet joining the main flow of gas can be reduced.

Although a description has been given by using a gas turbine as the turbine machine in the above first to third examples, the turbine machine may be another turbine machine, such as a steam turbine.

Furthermore, although the above first to third examples have been described assuming that the blades are the moving blades 2 and the structure body is the turbine casing 4, the present invention is directed to a case where the blades are stationary blades, and the structure body is a rotating shaft.

FIG. 4 shows a schematic view of the configuration in the case where the blades are stationary blades and the structure body is a rotating shaft, which is an embodiment and a modification of the above-described first example.

A rotating shaft (structure body) 20 has a rod-like shape that extends in the flow direction of the main flow of gas (main flow of fluid) passing through the above-described stationary blade rows (not shown) and moving blade rows 6 (see FIG. 1). The outer circumference of the rotating shaft 20 is formed in a recessed shape that is recessed toward the central axis of the rotating shaft 20. The recessed shape provided in the outer circumference of the rotating shaft 20 is defined by a wall surface (wall) 20a on the upstream side of the stationary blades (blades) 22, a wall surface 20b on the downstream side of the stationary blades 22, and a wall surface 20c connecting the wall surfaces 20a and 20b and located facing the radially inner side of stationary blade shrouds (shrouds) 23. Thus, the recessed shape provided in the outer circumference of the rotating shaft 20 is recessed toward the central axis of the rotating shaft 20.

Seal fins 25 are connected, at base ends, to the wall surface 20c that is provided in the outer circumference of the rotating shaft 20 and forms the recessed shape. The seal fins 25 include at least one seal fin 25, for example, three seal fins. Each of the seal fins 25a, 25b, and 25c extend radially outward from the wall surface 20c of the rotating shaft 20 toward the stationary blade shrouds 23. The tips of the seal fins 25a, 25b, and 25c extending toward the stationary blade shrouds 23 are disposed a predetermined distance away from surfaces of the stationary blade shrouds 23 facing the rotating shaft 20 (hereinbelow, "inner circumferential surfaces"). The number of seal fins 25 is not limited to three, but may be one, two, four or more.

These seal fins 25a, 25b, and 25c reduce the level of leakage of gas (leakage fluid) leaking out between the stationary blades 22 and the rotating shaft 20 and leaking out between the stationary blade shrouds 23 and the rotating shaft 20 toward the downstream side of the stationary blades 22. The predetermined distance between the inner circumferential surfaces of the stationary blade shrouds 23 and the tips of the seal fins 25a, 25b, and 25c in the radial direction is a radial distance that allows the level of leakage of gas leaking out between the stationary blades 22 and the rotating shaft 20 (hereinbelow, "leakage jet") during operation to be reduced to a minimum.

The stationary blades 22 have the stationary blade shrouds 23 at the tips thereof. The stationary blade shrouds 23 come into contact with adjacent shrouds and form a cylindrical shape. The inner circumferential surfaces of the stationary blade shrouds 23 are provided substantially parallel to the flow direction of the main flow of gas that has impinged on the stationary blades 22.

A cavity (space) 27 is defined by downstream portions of the stationary blade shrouds 23, a downstream portion of the seal fin (sealing part) 25c located on the most downstream side among the seal fins 25, and the wall surfaces 20b and 20c located on the downstream side of the recessed shape in the rotating shaft 20, and communicates with the main flow of gas that has impinged on the stationary blades 22. A corner (end) 20d on the outer circumferential side of the wall surface 20b of the rotating shaft 20, which forms the cavity 27, is disposed away from a stationary-blade-shroud extension (shroud extension) 31 extending along the inner circumferential surfaces of the stationary blade shrouds 23 toward the downstream side of the stationary blade shrouds 23 and away from a seal-fin extension (sealing-part extension) 30 provided substantially parallel thereto at a predetermined distance and extending toward the downstream side of the seal fin 25c located on the most downstream side via the tip of the seal fin 25c located on the most downstream side, and is located on the opposite side of the stationary-blade-shroud extension 31 with respect to the seal-fin extension 30.

The predetermined distance between the stationary-blade-shroud extension 31 and the seal-fin extension 30 is a radial distance that allows the level of leakage of the leakage jet leaking out between the stationary blade shrouds 31 and the seal fins 25 located on the most downstream side to be reduced to a minimum.

Next, the flows of the main flow of gas and the leakage jet will be described.

A portion of the main flow of gas that has been guided to the stationary blades 22 leaks out from the upstream side of the stationary blades 22 to a space between the stationary blade shrouds 23 and the rotating shaft 20. The main flow of gas leaking out to the space between the stationary blade shrouds 23 and the rotating shaft 20 is led out from between the stationary blade shrouds 23 and the seal fin 25c located on the most downstream side, becoming a leakage jet.

The leakage jet led out from between the stationary blade shrouds 23 and the seal fin 25c located on the most downstream side is led out to an area between the seal-fin extension 30 and the stationary-blade-shroud extension 31. Herein, because the corner 20d of the wall surface 20b on the downstream side of the rotating shaft 20 is disposed away from the stationary-blade-shroud extension 31 and from the seal-fin extension 30 and is located on the opposite side of the stationary-blade-shroud extension 31 with respect to the seal-fin extension 30, the leakage jet led out from between the seal-fin extension 30 and the stationary-blade-shroud extension 31 is led out toward the main flow of gas without colliding with the wall surface 20b or the corner 20d on the downstream side of the rotating shaft 20.

The leakage jet led out from between the seal-fin extension 30 and the stationary-blade-shroud extension 31 joins the main flow of gas that has impinged on the stationary blades 22 at a small inflow angle with respect to the flow direction thereof. The preferred inflow angle is 30° or less, but a smaller inflow angle is more preferable. Thus, an angle closer to parallel to the flow direction of the main flow of gas is more preferable, and an angle parallel to the flow direction of the main flow of gas is the most preferable.

Furthermore, because the leakage jet can be led out at a position away from the wall surface 20b and the corner (end) 20d on the downstream side of the rotating shaft 20, it is possible to prevent the leakage jet leaking out between the seal fin 25c located on the most downstream side and the stationary blade shrouds 23 from colliding with the wall surface 20b on the downstream side of the rotating shaft 20. Accordingly, it is possible to suppress a situation where the leakage jet collides with the wall surface 20b on the downstream side of the rotating shaft 20, the leakage jet, after collision, moves radially outward along the wall surface 20b on the downstream side of the rotating shaft 20, forming an eddy flowing counterclockwise, as indicated by dashed lines in FIG. 6, and the eddy and the main flow of gas flow in opposite directions when the eddy joins the main flow of gas, trapping the main flow of gas that has impinged on the stationary blades 22 in the cavity 27. That is, the leakage jet flows clockwise in the cavity 27, as indicated by dashed lines in FIG. 4.

Thus, it is possible to make the leakage jet join the flow of the main flow of gas that has impinged on the stationary blades 22 without greatly disturbing it and to reduce mixing loss caused by the leakage jet joining the flow of the main flow of gas.

The inner circumferential surfaces of the stationary blade shrouds 23 may have a shape other than the shape described in this modification, and they may be inclined like the outer circumferential surfaces on the downstream side of the moving blade shrouds 3b shown in FIG. 2 and moving blade shroud 3c shown in FIG. 3.

That is, the inner circumferential surfaces on the downstream side of the stationary blade shrouds 23 disposed a predetermined distance away from the seal fin 25c located on the most downstream side may be inclined such that they gradually become farther away from the rotating shaft 20 along the flow direction of the main flow of gas that has impinged on the stationary blades 22 or may be inclined such that they gradually become closer to the rotating shaft 20 along the flow direction of the main flow of gas that has impinged on the stationary blades 22.

If the inner circumferential surfaces on the downstream side of the stationary blade shrouds 23 are inclined as above, the preferred inclination angle is 30° or less with respect to the flow direction of the main flow of gas that has impinged on the stationary blades 22, which is an inflow angle that does not greatly disturb the flow of the main flow of gas when the leakage jet joins the main flow of gas that has impinged on the stationary blades 22.

### {Reference Signs List}

2 moving blade (blade)
3 (3a, 3b, 3c) moving blade shroud (shroud)
4 turbine casing (structure body)
4b wall surface (wall)
4d corner (end)
5c seal fin (sealing part) located on the most downstream side
7 cavity (space)
10 seal-fin extension (sealing-part extension)
11 moving-blade-shroud extension (shroud extension)

## Claims

1. A seal structure comprising:
shrouds (23) that are provided at tips of a plurality of stationary blades (22) on which a main flow of fluid impinges in operation and that come into contact with adjacent shrouds (23) to form a cylindrical shape;
a sealing part (25c) connected to a rotating shaft (20) facing the shrouds (23);
wherein the outer circumference of the rotating shaft (20) is formed in a recessed shape that is recessed towards the central axis of the rotating shaft (20) and that partially encloses the shrouds (23); and
a space (27) that is defined by downstream sides of the shrouds (23), a downstream side of the sealing part (25c), a wall surface (20c) of the recessed shape facing the radially inner side of the shrouds (23), and a wall (20b) of said recessed shape on a downstream side of the stationary blades (22), on a downstream side of the rotating shaft (20) and that communicates with the main flow of fluid that has impinged on the stationary blades (22),
wherein a corner (20d) of the wall (20b) on the downstream side of the rotating shaft (20) is formed so as to be disposed at a predetermined distance away from a shroud extension (31) extending toward the downstream side of the shrouds (23) and away from a sealing-part extension (30) provided substantially parallel to the shroud extension (31) and extending toward the downstream side of the sealing part (25c) and so as to be located radially on an opposite side of the shroud extension (31) with respect to the sealing part extension (30).

2. The seal structure according to claim 1, wherein surfaces of the shrouds (23) facing the rotating shaft (20) are provided substantially parallel to a flow direction of the main flow of fluid that has impinged on the stationary blades (22).

3. The seal structure according to claim 1, wherein surfaces of the shrouds (23) facing the rotating shaft (20) are inclined such that they gradually become farther away from the rotating shaft (20) along a flow direction of the main flow of fluid impinging on the stationary blades (22).

4. The seal structure according to claim 1, wherein surfaces of the shrouds (23) facing the rotating shaft (20) are inclined such that they gradually become closer to the rotating shaft (20) along a flow direction of the main flow of fluid impinging on the stationary blades (22).

5. A turbine machine comprising the seal structure according to any one of claims 1 to 4.

6. A power generating plant comprising the turbine machine according to claim 5.

## Patentansprüche

1. Eine Dichtungsstruktur mit:
Deckringen (23), die an Außenenden einer Vielzahl von stationären Schaufeln (22), auf welche eine Hauptströmung von Fluid im Betrieb auftrifft und die in Kontakt mit angrenzenden Deckringen (23) gelangen, um eine zylindrische Form zu bilden, vorgesehen sind,
einem Dichtungsteil (25c), das mit einer Drehwelle (20) den Deckringen (23) zugewandt verbunden ist,
wobei der Außenumfang der Drehwelle (20) in einer ausgenommenen Form ausgebildet ist, die zu der Mittelachse der Drehwelle (20) hin ausgenommen ist und die die Deckringe (23) teilweise umschließt, und
ein Raum (27), der durch stromabwärtige Seiten der Deckringe (23), eine stromabwärtige Seite des Dichtungsteils (25c), eine Wandfläche (20c) der ausgenommenen Form, welche der radialen Innenseite der Deckringe (23) zugewandt ist, und eine Wand (20b) der ausgenommenen Form an einer stromabwärtigen Seite der stationären Schaufeln (22), an einer stromabwärtigen Seite der Drehwelle (20) definiert ist und der mit der Hauptströmung von Fluid, die auf die stationären Schaufeln (22) aufgetroffen ist, kommuniziert,
wobei eine Ecke (20d) der Wand (20b) an der stromabwärtigen Seite der Drehwelle (20) so ausgebildet ist, dass er in eine vorbestimmte Entfernung weg von einer Deckringerweiterung (31), die sich zu der stromabwärtigen Seite der Deckringe (23) und weg von einer Dichtungsteilerweiterung (30), welche im Wesentlichen parallel zu der Deckringerweiterung (31) vorgesehen und sich zu der stromabwärtigen Seite des Dichtungsteils (25c) erstreckt, angeordnet ist, und so, dass sie sich radial an einer gegenüberliegenden Seite der Deckringerweiterung (31) bezüglich der Dichtungsteilerweiterung (30) befindet.

2. Die Dichtungsstruktur gemäß Anspruch 1, wobei Oberflächen der Deckringe (23), die der Drehwelle (20) zugewandt sind, im Wesentlichen parallel zu einer Strömungsrichtung der Hauptströmung von Fluid, die auf die stationären Schaufeln (22) aufgetroffen ist, vorgesehen sind.

3. Die Dichtungsstruktur gemäß Anspruch 1, wobei Oberflächen der Deckringe (23), die der Drehwelle (20) zugewandt sind, so geneigt sind, dass sie sich allmählich von der Drehwelle (20) entlang einer Strömungsrichtung der Hauptströmung von Fluid, die auf die stationären Schaufeln (22) auftrifft, entfernen.

4. Die Dichtungsstruktur gemäß Anspruch 1, wobei Oberflächen der Deckringe (23), die der Drehwelle (20) zugewandt sind, so geneigt sind, dass sie sich allmählich der Drehwelle (20) entlang einer Strömungsrichtung der Hauptströmung von Fluid, die auf die stationären Schaufeln (22) auftrifft, annähern.

5. Eine Turbinenmaschine mit der Dichtungsstruktur gemäß einem der Ansprüche 1 bis 4.

6. Ein Energieerzeugungskraftwerk mit der Turbinenmaschine gemäß Anspruch 5.

## Revendications

1. Structure d'étanchéité comprenant :
des viroles (23) qui sont prévues aux pointes d'une pluralité d'aubes (22) fixes sur lesquelles arrive en fonctionnement un courant principal de fluide et qui viennent en contact des viroles (23) voisines pour donner une forme cylindrique,
une partie (25c) d'étanchéité reliée à un arbre (20) tournant faisant face aux viroles (23),
dans laquelle la circonférence extérieure de l'arbre (20) tournant est conformée en une forme évidée, qui est évidée en direction de l'axe central de l'arbre (20) tournant et qui entoure partiellement les viroles (23) et
un espace (27) qui est défini par des côtés en aval des viroles (23), par un côté en aval de la partie (25c) d'étanchéité, par une surface (20c) de paroi de la forme évidée faisant face au côté intérieur radialement des viroles (23), par une paroi (20b) de la forme évidée d'un côté en aval des aubes (22) fixes, d'un côté en aval de l'arbre (20) tournant et qui communique avec le courant principal de fluide qui est arrivé sur les aubes (22) fixes,
dans laquelle un coin (20d) de la paroi (20b), du côté en aval de l'arbre (20) tournant est formé de manière à être éloigné d'une distance déterminée à l'avance d'un prolongement (31) de viroles s'étendant vers le côté en aval des viroles (23) et éloigné d'un prolongement (30) de partie d'étanchéité prévu sensiblement parallèlement au prolongement (31) de virole et s'étendant vers le côté en aval de la partie (25) d'étanchéité et de manière à être placé radialement du côté opposé du prolongement (31) de virole par rapport au prolongement (30) de partie d'étanchéité.

2. Structure d'étanchéité suivant la revendication 1, dans laquelle des surfaces des viroles (23) faisant face à l'arbre (20) tournant sont prévues sensiblement parallèlement à une direction d'écoulement du courant principal de fluide qui est arrivé sur les aubes (22) fixes.

3. Structure d'étanchéité suivant la revendication 1, dans laquelle des surfaces des viroles (23) faisant face à l'arbre (20) tournant sont inclinées de manière à s'éloigner peu à peu de l'arbre (20) tournant, le long d'une direction d'écoulement du courant principal de fluide arrivant sur les aubes (22) fixes.

4. Structure d'étanchéité suivant la revendication 1, dans laquelle des surfaces des viroles (23) faisant face à l'arbre (20) tournant sont inclinées de manière à se rapprocher peu à peu de l'arbre (20) tournant le long d'une direction d'écoulement du courant principal de fluide arrivant sur les aubes (22) fixes.

5. Machine à turbine comprenant la structure d'étanchéité, suivant l'une quelconque des revendications 1 à 4.

6. Centrale électrique comprenant la machine à turbine suivant la revendication 5.
